# EUROPÄISCHE PATENTSCHRIFT

(11) **EP 3 444 511 B1**
(45) Veröffentlichungstag und Bekanntmachung des Hinweises auf die Patenterteilung: **12.02.2020**
(21) Anmeldenummer: 17186640.3
(22) Anmeldetag: 17.08.2017
(51) Int. Cl.: F16K 17/40, F16K 17/16

(54) **DRUCKSICHERUNG UND VERFAHREN ZUR HERSTELLUNG**
PRESSURE PROTECTION MECHANISM AND METHOD FOR THE PREPARATION OF SAME
COUPE-GAZ ET SON PROCÉDÉ DE FABRICATION

(43) Veröffentlichungstag der Anmeldung: 20.02.2019
(73) Patentinhaber: Schunk Kohlenstofftechnik GmbH, 35452 Heuchelheim (DE)
(72) Erfinder: Baumann, Sören, 35394 Gießen (DE); Jawojsz, Tasja, 35579 Wetzlar (DE)
(74) Vertreter: advotec.

(56) Entgegenhaltungen:
- US-A- 2 947 443
- US-A- 5 579 942
- US-B1- 6 311 715

## Beschreibung

Die Erfindung betrifft eine Drucksicherung sowie ein Verfahren zur Herstellung einer Drucksicherung, wobei die Drucksicherung eine Berstscheibe und eine Vakuumstütze umfasst, wobei die Berstscheibe und die Vakuumstütze aus Graphit ausgebildet sind, wobei die einstückig ausgebildete Berstscheibe eine Ausbruchseite und eine Einbruchseite aufweist, wobei die Berstscheibe auf der Einbruchseite eine Ausnehmung aufweist, die einen Berstbereich innerhalb eines Halterings der Berstscheibe ausbildet, wobei die Vakuumstütze in die Ausnehmung eingesetzt ist.

Derartige Drucksicherungen sind hinreichend bekannt und werden regelmäßig in der Apparatetechnik gegen Überdruck beziehungsweise Unterdruck eingesetzt. Mit einer Drucksicherung soll zuverlässig verhindert werden, dass nicht erwünschte Druckniveaus in Apparaten unter- oder überschritten werden, indem die Drucksicherung beziehungsweise deren Berstscheibe zerbirst. Dabei wird eine Membran der Berstscheibe irreversibel zerstört. Die Membran kann eine Metallfolie oder auch aus Graphit ausgebildet sein. Eine Materialwahl der Membran beziehungsweise der Berstscheibe ist dabei stets vom jeweiligen Anwendungsfall abhängig. Bei beispielsweise korrosiven Anwendungen sind Drucksicherungen regelmäßig aus Graphit ausgebildet, der gegen Säurekorrosion beständig ist. Zur gasdichten Ausbildung des Graphits kann dieser beispielsweise mit einem Harz imprägniert sein. Auch ist es bekannt, Berstscheiben mit pyrolytisch abgeschiedenem Kohlenstoff zu beschichten, um eine gasundurchlässige Berstscheibe, die hochtemperaturbeständig ist, zu erhalten. Weiter sind Drucksicherungen bekannt, bei denen eine Berstscheibe eben ausgebildet und zwischen zwei Halteringen mit jeweils Dichtungen geklemmt ist. Bei Hochtemperaturanwendungen kann es jedoch auch sinnvoll sein, auf eine der Dichtungen zu verzichten und die Berstscheibe integral mit dem Haltering, das heißt einstückig, auszubilden.

Regelmäßig weist eine Drucksicherung auch eine Vakuumstütze auf, wobei diese ein Ausbrechen einer Membran in Folge eines Unterdrucks innerhalb beispielsweise einer Druckleitung verhindern soll. Ansonsten könnten Bruchstücke der Berstscheibe in die Druckleitung gelangen, was auf jeden Fall zu verhindern ist. Die Relativposition der Vakuumstütze zur Berstscheibe bestimmt daher eine Lage einer Ausbruchseite und einer Einbruchseite der Drucksicherung. Dadurch, dass die Vakuumstütze an der Membran anliegt beziehungsweise benachbart dieser angeordnet ist, kann die Membran nur zur Ausbruchseite hin zerbersten. Folglich befindet sich die Vakuumstütze stets innerhalb eines geschlossenen Systems einer Anlage und muss ebenfalls korrosionsbeständig ausgebildet sein.

Insbesondere bei einstückig ausgebildeten Berstscheiben, das heißt Berstscheiben, die einen Haltering mit einer eine Membran ausbildenden Ausnehmung aufweisen, ist es erforderlich, die Vakuumstütze in die Ausnehmung einzusetzen und darin fest zu fixieren. Eine einstückige Ausbildung der Vakuumstütze zusammen mit der Membran ist hier nicht möglich, da dann die Membran nicht mehr mit einem genau definierten Berstdruck ausbildbar wäre. Eine Fixierung der Vakuumstütze innerhalb der Ausnehmung und benachbart der Membran erfolgt regelmäßig mittels eines Klebermaterials. Bei derartigen Drucksicherungen ist jedoch nachteilig, dass diese nur auf Anwendungstemperaturen beschränkt sind, für die das Klebermaterial noch geeignet ist. Das Klebermaterial schränkt weiter eine Anwendung der Drucksicherung für bestimmte chemische Zusammensetzungen ein, da das Klebermaterial nicht vollständig chemisch beständig ist. So kann dann beispielsweise bei einem Lösen des Klebers die Berstscheibe bei Unterdruck ungewollt zerbersten. Hinzu kommt, dass Bestandteile des Klebermaterials in eine Anlage gelangen und diese in unerwünschter Weise verunreinigen können. Diese Gefahr besteht insbesondere auch bei Hochtemperaturanwendungen.

Aus der US 6 311 715 B1 ist eine Drucksicherung mit einer Berstscheibe bekannt, wobei die Berstscheibe topfförmig ausgebildet ist und eine Vakuumstütze, die in die Berstscheibe einsetzbar ist, umfasst. Weiter sind die Berstscheibe und die Vakuumstütze aus Graphit ausgebildet und die Vakuumstütze ist mittels eines kohlenstoffhaltigen Zements innerhalb einer Ausnehmung der Berstscheibe gesichert.

Die US 2 947 443 A beschreibt eine aus Kohlenstoff oder Graphit bestehende Berstscheibe, die zwischen zwei Ringen eingespannt ist. In einen der Ringe ist eine Vakuumstütze einsetzbar. Die Berstscheibe ist im Wesentlichen flach ausgebildet, sodass sie keine Ausnehmungen zur Aufnahme der Vakuumstütze aufweist.

Eine weitere derartige Drucksicherung ist aus der US 5 579 942 A bekannt, wobei hier die Berstscheibe topfförmig mit einer Ausnehmung ausgebildet ist, in die eine Vakuumstütze einsetzbar ist. Die Vakuumstütze ist in der Ausnehmung formschlüssig mittels Stiften oder einem Sprengring gesichert. Weitere Materialangaben zur Ausbildung der Stifte oder des Sprengrings offenbart diese Druckschrift nicht.

Der vorliegenden Erfindung liegt daher die Aufgabe zugrunde, eine Drucksicherung sowie ein Verfahren zu deren Herstellung vorzuschlagen, die beziehungsweise das eine Verwendung der Drucksicherung bei hohen Temperaturen oder chemisch aggressiven Medien ermöglicht.

Diese Aufgabe wird durch eine Drucksicherung mit den Merkmalen des Anspruchs 1 und ein Verfahren mit den Merkmalen des Anspruchs 16 gelöst.

Die erfindungsgemäße Drucksicherung umfasst eine Berstscheibe und eine Vakuumstütze, wobei die Berstscheibe und die Vakuumstütze aus Graphit ausgebildet sind, wobei die einstückig ausgebildete Berstscheibe eine Ausbruchseite und eine Einbruchseite aufweist, wobei die Berstscheibe auf der Einbruchseite eine Ausnehmung aufweist, die einen Berstbereich innerhalb eines Halterings der Berstscheibe ausbildet, wobei die Vakuumstütze in die Ausnehmung eingesetzt ist, wobei die Drucksicherung eine aus Kohlenstoff ausgebildete Halteeinrichtung zur formschlüssigen Befestigung der Vakuumstütze in der Ausnehmung umfasst, wobei die Drucksicherung klebstofffrei und/oder metallfrei ausgebildet ist.

Dadurch, dass die Vakuumstütze formschlüssig in der Ausnehmung befestigt ist, kann auf eine stoffschlüssige Befestigung der Vakuumstütze mittels beispielsweise eines Klebermaterials verzichtet werden. Das Klebermaterial kann sich dann auch nicht mehr bei hohen Temperaturen oder chemisch aggressiven Medien innerhalb einer Apparatur oder Anlage auflösen oder eine Atmosphäre innerhalb der Apparatur verunreinigen. Prinzipiell ist es zwar möglich, die Vakuumstütze innerhalb der Ausnehmung ergänzend mit einem Klebermaterial zu befestigen, dann ist jedoch durch die formschlüssige Befestigung der Vakuumstütze in der Ausnehmung sichergestellt, dass sich auch bei einem Auflösen des Klebermaterials die Vakuumstütze nicht aus der Ausnehmung lösen kann. Da die Halteeinrichtung wie die Berstscheibe und die Vakuumstütze aus Kohlenstoff ausgebildet ist, ist die Halteeinrichtung ebenfalls chemisch beständig und kann hohen Temperaturen ausgesetzt werden. Die Drucksicherung wird dadurch für hohe Anwendungstemperaturen von bis zu 500 °C in oxidativer und bis zu 1.400 °C in inerter Atmosphäre einsetzbar. Die Berstscheibe kann insgesamt einfach rotationssymmetrisch ausgebildet werden.

Erfindungsgemäß ist die Drucksicherung klebstofffrei und/oder metallfrei ausgebildet . So kann zumindest sichergestellt werden, dass eine Atmosphäre einer Anlage nicht chemisch verunreinigt wird. Insbesondere können auch Metalle Oxidationsprodukte abgeben, die eine Atmosphäre der Anlage in unerwünschter Weise verunreinigen können. Eine klebstofffreie beziehungsweise metallfreie Drucksicherung eignet sich daher besonders gut für Anwendungen, die eine chemisch reine Atmosphäre erfordern.

So ist es besonders vorteilhaft, wenn die Drucksicherung vollständig aus Kohlenstoff besteht. Es kann sich dann auf der Einbruchseite der Drucksicherung neben Kohlenstoff kein weiterer Stoff befinden, der eine Atmosphäre einer Anlage oder Apparatur verunreinigen könnte. Die Drucksicherung kann auch vollständig aus Modifikationen oder besonderen Formen von Kohlenstoff bestehen. Dies betrifft insbesondere das Material der Halteeinrichtung.

Der Berstbereich kann eine gleichmäßig dicke und ebene Membran aufweisen. Der Berstbereich kann beispielsweise bereits dadurch ausgebildet werden, dass die Ausnehmung in der Berstscheibe durch beispielsweise spanende Bearbeitung so ausgebildet wird, dass im Bereich der Ausbruchseite der Berstscheibe eine im Vergleich zum Haltering relativ dünne Membran verbleibt. Um einen Berstdruck möglichst genau vorausbestimmen zu können, ist es vorteilhaft, wenn diese Membran gleichmäßig dick und eben ist. Gleichwohl ist es möglich, dass auch auf der Ausbruchseite eine derartige Ausnehmung ausgebildet ist, die jedoch dann nicht zur Aufnahme der Vakuumstütze dienen kann. Durch die Ausbildung der Ausnehmung wird es möglich, die Membran und den Haltering integral als ein Bauteil auszubilden.

Die Membran kann eine durch eine Materialschwächung ausgebildete Sollbruchstelle aufweisen. Die Materialschwächung kann beispielsweise eine umlaufende oder auch kreuzförmige Nut in der Membran sein. Die Membran kann dann auch vergleichsweise dicker ausgebildet sein.

Die Berstscheibe kann mit pyrolytischem Kohlenstoff aus der Gasphase infiltriert und/oder beschichtet werden, sodass die Membran gasdicht ist.

Die Berstscheibe wird besonders einfach ausbildbar, wenn die Ausbruchseite der Berstscheibe vollständig eben ausgebildet ist. Der Berstbereich beziehungsweise eine den Berstbereich ausbildende Membran kann dann alleine durch Ausbilden der Ausnehmung hergestellt werden.

Die Vakuumstütze kann scheibenförmig ausgebildet sein und mit einem Außendurchmesser an einem Innendurchmesser des Halterings anliegen. Zwischen dem Außendurchmesser und dem Innendurchmesser kann infolge der formschlüssigen Befestigung der Vakuumstütze in der Ausnehmung eine Spielpassung, vorzugsweise eine Klemmpassung ausgebildet werden. Da in einer radialen Richtung der Vakuumstütze keine Kräfte übertragen werden müssen, kann ein radiales Spiel der Vakuumstütze innerhalb der Ausnehmung toleriert werden, wodurch die Drucksicherung noch einfacher herstellbar wird.

Weiter kann in der Vakuumstütze eine Mehrzahl von Durchgangsöffnungen ausgebildet sein. Die Durchgangsöffnungen können beispielsweise Durchgangsbohrungen sein, die kreisringförmig und äquidistant in der Vakuumstütze angebracht sind und so eine gleichmäßige Verteilung eines Drucks auf die Einbruchseite beziehungsweise den Berstbereich sicherstellen können. Prinzipiell kann die Vakuumstütze auch mit beliebigen anderen Durchgangsöffnungen ausgebildet sein.

In der Ausnehmung kann ein Anschlag ausgebildet sein, der eine Bewegung der Vakuumstütze in Richtung des Berstbereichs begrenzt. So kann verhindert werden, dass die Vakuumstütze an einer Membran der Berstscheibe anliegen bzw. eine Druckkraft durch beispielsweise Eigengewicht auf die Membran bewirken kann, die diese in unerwünschter Weise zerstören kann.

Die Halteeinrichtung kann aus einer Nut in einer Innenfläche des Halterings und einem in die Nut eingesetzten Halteelement ausgebildet sein. So kann eine Montage der Vakuumstütze in der Ausnehmung besonders einfach dadurch erfolgen, dass die Vakuumstütze in die Ausnehmung eingesetzt wird und nachfolgend das Halteelement in die Nut eingesetzt wird. Das Halteelement kann dann die Nut zu der Innenfläche des Halterings so weit radial überragen, dass die Vakuumstütze aus der Ausnehmung nicht mehr herausfallen kann, wodurch eine formschlüssige Befestigung der Vakuumstütze in der Ausnehmung geschaffen werden kann. Die Nut kann beispielsweise im Rahmen der Ausbildung der Ausnehmung einfach durch spanende Fertigung hergestellt werden. Das Halteelement kann so beschaffen sein, dass es in der Nut geklemmt oder ebenfalls in der Nut formschlüssig befestigt werden kann.

Vorteilhaft ist es, wenn die Vakuumstütze mit einem Ende an dem Berstbereich und mit einem gegenüberliegenden Ende an dem Halteelement anliegt. Eine axiale Bewegung der Vakuumstütze innerhalb der Ausnehmung kann so leicht verhindert werden. Es kann auch weitestgehend sichergestellt werden, dass eventuelle Bruchstücke der Berstscheibe nur auf die Ausbruchseite gelangen können.

In einer Ausführungsform kann die Nut aus einer Ringnut ausgebildet sein. In weiteren Ausführungsformen kann die Nut auch schraubenförmig oder nur abschnittsweise radial verlaufend ausgebildet sein, wobei eine Ringnut am einfachsten herstellbar ist.

Das Halteelement kann eine aus Kohlenstofffasern ausgebildete Schnur, Litze, Kordel oder ein Band sein. Das Halteelement kann zwar auch ein Ring sein, der durch spanende Bearbeitung aus Graphit hergestellt ist, ein derartiger Ring ist jedoch nur aufwendig herzustellen und kann leicht zerbrechen. Ein aus Kohlenstofffasern gedrehtes oder geflochtenes Halteelement kann hingegen leicht in eine beliebige Form gebracht und an die Nut angepasst werden. In einer besonders einfachen Ausführungsform kann es vorgesehen sein, die gedrehten oder geflochtenen Kohlenstofffasern in die Nut einzulegen bzw. zu stopfen und so darin zu fixieren.

Vorteilhaft ist es jedoch, wenn die Kohlenstofffasern mit pyrolytischem Kohlenstoff infiltriert und/oder beschichtet sind. So kann dann eine Form des Halteelements einfach ausgebildet und formstabil fixiert werden. Beispielsweise können die Kohlenstofffasern um einen Dorn herum gewickelt und dann mit dem pyrolytischen Kohlenstoff infiltriert und/oder beschichtet werden, sodass ein ringförmiges Halteelement erhalten wird.

Demnach kann das Halteelement zumindest teilweise formstabil ausgebildet sein.

So kann das Halteelement einen Federring ausbilden, welcher einfach in die Nut eingelegt und durch seine Federwirkung darin formschlüssig fixiert werden kann.

Bei dem erfindungsgemäßen Verfahren zur Herstellung einer Drucksicherung wird eine Berstscheibe und eine Vakuumstütze der Drucksicherung aus Graphit ausgebildet, wobei die Berstscheibe einstückig mit einer Ausbruchseite und einer Einbruchseite ausgebildet wird, wobei auf der Einbruchseite der Berstscheibe eine Ausnehmung ausgebildet wird, die einen Berstbereich innerhalb eines Halterings der Berstscheibe ausbildet, wobei die Vakuumstütze in die Ausnehmung eingesetzt wird, wobei eine Halteeinrichtung der Drucksicherung aus Kohlenstoff ausgebildet wird, wobei die Vakuumstütze mit der Halteeinrichtung formschlüssig in der Ausnehmung befestigt wird, wobei die Drucksicherung klebstofffrei und/oder metallfrei ausgebildet wird. Zu den vorteilhaften Wirkungen des erfindungsgemäßen Verfahrens wird auf die Vorteilsbeschreibung der erfindungsgemäßen Drucksicherung verwiesen. Weitere vorteilhafte Ausführungsformen des Verfahrens ergeben sich aus den Merkmalsbeschreibungen der auf den Anspruch 1 rückbezogenen Unteransprüche.

Nachfolgend wird eine vorteilhafte Ausführungsform der Erfindung unter Bezugnahme auf die beigefügten Zeichnungen näher erläutert.

Es zeigen:
- **Fig. 1:**: eine Draufsicht einer Berstscheibe;
- **Fig. 2:**: eine Längsschnittansicht der Berstscheibe;
- **Fig. 3:**: eine Draufsicht einer Vakuumstütze;
- **Fig. 4:**: eine Längsschnittansicht der Vakuumstütze;
- **Fig. 5:**: eine Draufsicht einer Drucksicherung;
- **Fig. 6:**: eine Längsschnittansicht der Drucksicherung;
- **Fig. 7:**: eine Längsschnittansicht einer weiteren Berstscheibe;
- **Fig. 8:**: eine Längsschnittansicht einer weiteren Vakuumstütze.

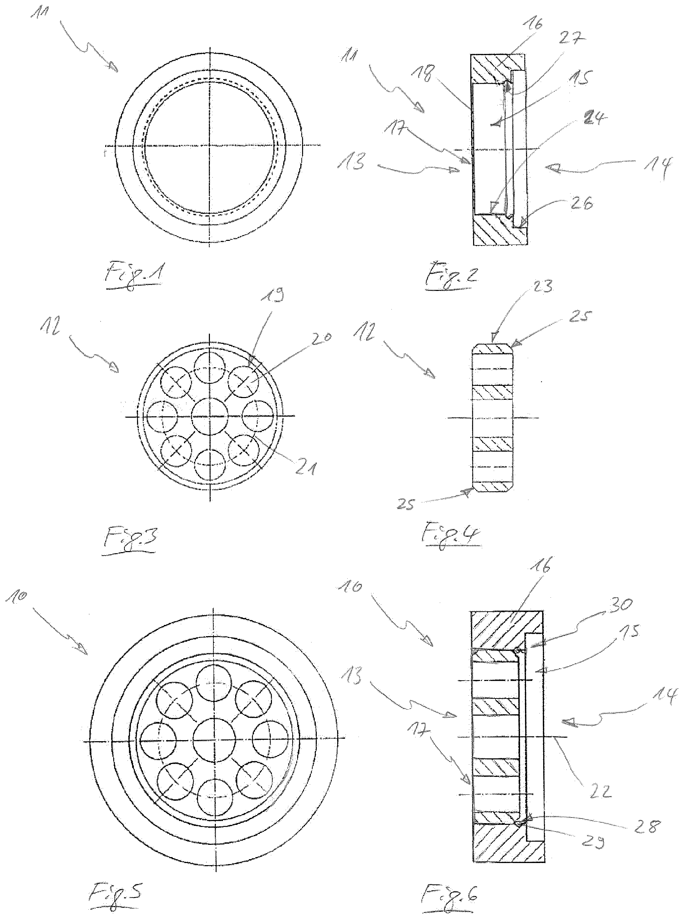

Eine Zusammenschau der **Fig. 1** bis **6** zeigt eine Drucksicherung 10 mit einer Berstscheibe 11 und einer Vakuumstütze 12, wobei die Berstscheibe 11 und die Vakuumstütze 12 vollständig aus Graphit ausgebildet sind. Die einstückig ausgebildete Berstscheibe 11 weist eine Ausbruchseite 13 und eine Einbruchseite 14 auf, wobei in der Einbruchseite 14 eine im Wesentlichen kreisrunde Ausnehmung 15 ausgebildet ist. Durch die Ausnehmung 15 wird ein Haltering 16 und ein Berstbereich 17 der Berstscheibe 11 ausgebildet, wobei der Berstbereich 17 eine gleichmäßig dicke und ebene Membran 18 ist. Die Ausbruchseite 13 der Berstscheibe 11 ist vollständig eben ausgebildet.

Die Vakuumstütze 12 ist scheibenförmig ausgebildet und weist eine Mehrzahl von Durchgangsöffnungen 19 auf. Die Durchgangsöffnungen 19 sind als Bohrung 20 entlang eines Kreisrings 21 koaxial und relativ zu einer Längsachse 22 der Drucksicherung 10 ausgebildet. Die Vakuumstütze 12 ist in die Ausnehmung 15 so eingesetzt, dass ein Außendurchmesser 23 der Vakuumstütze 12 an einem Innendurchmesser 24 des Halterings 16 beziehungsweise der Ausnehmung 15 im Wesentlichen anliegt. Weiter sind dann am Außendurchmesser 23 Fasen 25 ausgebildet, die ein Einsetzen der Vakuumstütze 12 in die Ausnehmung 15 erleichtern.

Innerhalb der Ausnehmung 15 sind ein abgesetzter Innendurchmesser 26 sowie eine Ringnut 27 ausgebildet. In die Ringnut 27 ist ein Halteelement 28 eingesetzt, welches aus hier nicht näher dargestellten, mit pyrolytischem Kohlenstoff infiltrierten und beschichteten Kohlenstofffasern ausgebildet ist. Das Halteelement 28 ist dabei im Wesentlichen formstabil und bildet einen Federring 29 aus, der die Vakuumstütze 12 formschlüssig in der Ausnehmung 15 haltert. Die Ringnut 27 ist dabei so in der Ausnehmung 15 angebracht, dass die Vakuumstütze 12 in axialer Richtung relativ zu der Längsachse 22 im Wesentlichen spielfrei in der Ausnehmung 15 gehaltert ist. Die Ringnut 27 und das Halteelement 28 bilden demnach eine Halteeinrichtung 30 aus.

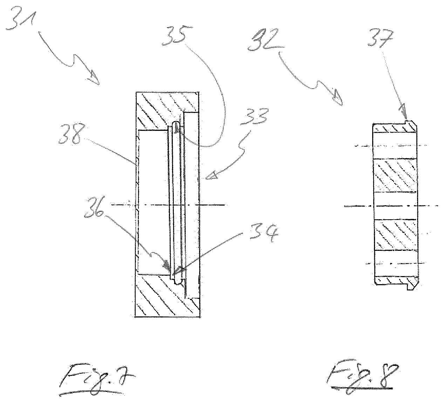

Eine Zusammenschau der **Fig. 7** und **8** zeigt eine Berstscheibe 31 und eine Vakuumstütze 32 einer hier nicht vollständig dargestellten Drucksicherung. Im Unterschied zu der Berstscheibe aus **Fig. 2** ist in einer Ausnehmung 33 der Berstscheibe 31 ein Absatz 34 mit einer Ringnut 35 ausgebildet. Der Absatz 34 bildet einen Anschlag 36 für einen an der Vakuumstütze 32 ausgebildeten ringförmigen Vorsprung 37 aus. So kann verhindert werden, dass die Vakuumstütze 32 an einer Membran 38 der Berstscheibe 31 anliegen bzw. eine Druckkraft auf die Membran 38 bewirken kann, die diese in unerwünschter Weise zerstören kann.

## Patentansprüche

1. Drucksicherung (10), umfassend eine Berstscheibe (11, 31) und eine Vakuumstütze (12, 32), wobei die Berstscheibe und die Vakuumstütze aus Graphit ausgebildet sind, wobei die einstückig ausgebildete Berstscheibe eine Ausbruchseite (13) und eine Einbruchseite (14) aufweist, wobei die Berstscheibe auf der Einbruchseite eine Ausnehmung (15, 33) aufweist, die einen Berstbereich (17) innerhalb eines Halterings (16) der Berstscheibe ausbildet, wobei die Vakuumstütze in die Ausnehmung eingesetzt ist, wobei die Drucksicherung eine Halteeinrichtung (30) zur Befestigung der Vakuumstütze in der Ausnehmung umfasst, **dadurch gekennzeichnet,**
**dass** die Halteeinrichtung aus Kohlenstoff ausgebildet ist, die Befestigung der Vakuumstütze in der Ausnehmung formschlüssig ist, und die Drucksicherung klebstofffrei und/oder metallfrei ausgebildet ist.

2. Drucksicherung nach Anspruch 1,
**dadurch gekennzeichnet,**
**dass** die Drucksicherung (10) vollständig aus Kohlenstoff besteht.

3. Drucksicherung nach einem der vorangehenden Ansprüche,
**dadurch gekennzeichnet,**
**dass** der Berstbereich (17) eine gleichmäßig dicke und ebene Membran (18, 38) aufweist.

4. Drucksicherung nach einem der vorangehenden Ansprüche,
**dadurch gekennzeichnet,**
**dass** die Membran (18, 38) eine durch eine Materialschwächung ausgebildete Sollbruchstelle aufweist.

5. Drucksicherung nach einem der vorangehenden Ansprüche,
**dadurch gekennzeichnet,**
**dass** die Ausbruchseite (13) der Berstscheibe (11, 31) vollständig eben ausgebildet ist.

6. Drucksicherung nach einem der vorangehenden Ansprüche,
**dadurch gekennzeichnet,**
**dass** die Vakuumstütze (12, 32) scheibenförmig ausgebildet ist und mit einem Außendurchmesser (23) an einem Innendurchmesser (24) des Halterings (16) anliegt.

7. Drucksicherung nach einem der vorangehenden Ansprüche,
**dadurch gekennzeichnet,**
**dass** in der Vakuumstütze (12, 32) eine Mehrzahl von Durchgangsöffnungen (19) ausgebildet ist.

8. Drucksicherung nach einem der vorangehenden Ansprüche,
**dadurch gekennzeichnet,**
**dass** in der Ausnehmung (33) ein Anschlag (36) ausgebildet ist, der eine Bewegung der Vakuumstütze (32) in Richtung des Berstbereichs begrenzt.

9. Drucksicherung nach einem der vorangehenden Ansprüche,
**dadurch gekennzeichnet,**
**dass** die Halteeinrichtung (30) aus einer Nut in einer Innenfläche des Halterings (16) und einem in die Nut eingesetzten Halteelement (28) ausgebildet ist.

10. Drucksicherung nach Anspruch 9,
**dadurch gekennzeichnet,**
**dass** die Vakuumstütze (12, 32) mit einem Ende an dem Berstbereich (17) und mit einem gegenüberliegenden Ende an dem Halteelement (28) anliegt.

11. Drucksicherung nach Anspruch 9 oder 10,
**dadurch gekennzeichnet,**
**dass** die Nut als eine Ringnut (27, 35) ausgebildet ist.

12. Drucksicherung nach einem der Ansprüche 9 bis 11,
**dadurch gekennzeichnet,**
**dass** das Halteelement (28) eine aus Kohlenstofffasern ausgebildete Schnur, Litze, Kordel oder ein Band ist.

13. Drucksicherung nach Anspruch 12,
**dadurch gekennzeichnet,**
**dass** die Kohlenstofffasern mit pyrolytischem Kohlenstoff infiltriert und/oder beschichtet sind.

14. Drucksicherung nach einem der Ansprüche 9 bis 13,
**dadurch gekennzeichnet,**
**dass** das Halteelement (28) zumindest teilweise formstabil ausgebildet ist.

15. Drucksicherung nach einem der Ansprüche 9 bis 14,
**dadurch gekennzeichnet,**
**dass** das Halteelement (28) einen Federring (29) ausbildet.

16. Verfahren zur Herstellung einer Drucksicherung (10), wobei eine Berstscheibe (11, 31) und eine Vakuumstütze (12, 32) der Drucksicherung aus Graphit ausgebildet werden, wobei die Berstscheibe einstückig mit einer Ausbruchseite (13) und einer Einbruchseite (14) ausgebildet wird, wobei auf der Einbruchseite der Berstscheibe eine Ausnehmung (15, 33) ausgebildet wird, die einen Berstbereich (17) innerhalb eines Halterings (16) der Berstscheibe ausbildet, wobei die Vakuumstütze in die Ausnehmung eingesetzt wird,
**dadurch gekennzeichnet,**
**dass** eine Halteeinrichtung (30) der Drucksicherung aus Kohlenstoff ausgebildet wird, wobei die Vakuumstütze mit der Halteeinrichtung formschlüssig in der Ausnehmung befestigt wird, wobei die Drucksicherung klebstofffrei und/oder metallfrei ausgebildet wird.

## Claims

1. A pressure relief device (10), comprising a rupture disc (11, 31) and a vacuum support (12, 32), the rupture disc and the vacuum support being made of graphite, the one-piece rupture disc having an exit side (13) and an entry side (14), the rupture disc having a recess (15, 33) on the entry side (14), said recess (15, 33) forming a rupture area (17) within a retainer (16) of the rupture disc, the vacuum support being inserted in the recess,
**characterized in that**
the pressure relief device has a carbon retaining device (30) for a form-fitted fastening of the vacuum support in the recess, the pressure relief device being made free of adhesive material and/or metal.

2. The pressure relief device according to claim 1,
**characterized in that**
the pressure relief device (10) is made entirely of carbon.

3. The pressure relief device according to any one of the preceding claims,
**characterized in that**
the rupture area (17) has an evenly thick and flat membrane (18, 38).

4. The pressure relief device according to any one of the preceding claims,
**characterized in that**
the membrane (18, 38) has a predetermined breaking point realized from material fatigue.

5. The pressure relief device according to any one of the preceding claims,
**characterized in that**
the exit side (13) of the rupture disc (11, 31) is designed entirely flat.

6. The pressure relief device according to any one of the preceding claims,
**characterized in that**
the vacuum support (12, 32) is shaped like a disc und abuts against an inner diameter (24) of the retainer (16) with its outer diameter (23).

7. The pressure relief device according to any one of the preceding claims,
**characterized in that**
a plurality of through openings (19) are formed in the vacuum support (12, 32).

8. The pressure relief device according to any one of the preceding claims,
**characterized in that**
an abutment (36) is formed in the recess (33) and limits a movement of the vacuum support (32) in the direction of the rupture area.

9. The pressure relief device according to any one of the preceding claims,
**characterized in that**
the retaining device (30) is made of a groove in an inner surface of the retainer (16) and a retaining element (28) inserted in the groove.

10. The pressure relief device according to claim 9,
**characterized in that**
the vacuum support (12, 32) abuts against the rupture area (17) with one end and against the retaining element (28) with an opposite end.

11. The pressure relief device according to claim 9 or 10,
**characterized in that**
the groove is realized as a circular groove (27, 35).

12. The pressure relief device according to any one of the claims 9 to 11,
**characterized in that**
the retaining element (28) is a string, braid, cord or band made of carbon fibers.

13. The pressure relief device according to claim 12,
**characterized in that**
the carbon fibers are infiltrated by and/or coated with pyrolytic carbon.

14. The pressure relief device according to any one of the claims 9 to 13,
**characterized in that**
the retaining element (28) is at least partially rigid.

15. The pressure relief device according to any one of the claims 9 to 14,
**characterized in that**
the retaining element (28) forms a spring washer (29).

16. A method for producing a pressure relief device (10), a rupture disc (11, 31) and a vacuum support (12, 32) of the pressure relief device being made of graphite, the rupture disc being made in one piece having an exit side (13) and an entry side (14), a recess (15, 33) being formed on the entry side of the rupture disc and forming a rupture area (17) within the retainer (16) of the rupture disc, the vacuum support being inserted in the recess,
**characterized in that**
a retaining device (30) of the pressure relief device is made of carbon, the vacuum support being fastened in the recess in a form-fitted manner by means of the retaining device, the pressure relief device being made free of adhesive material and/or metal.

## Revendications

1. Dispositif (10) de décharge de pression, comprenant un disque (11, 31) de rupture et un support (12, 32) de vide, le disque de rupture et le support de vide étant en graphite, le disque de rupture fabriqué en une seule pièce ayant un côté (13) de sortie et un côté (14) d'entrance, le disque de rupture ayant un évidement (15, 33) sur le côté (14) d'entrance, l'évidement (15, 33) formant une zone (17) de rupture dans un anneau (16) de retenue du disque de rupture, le support de vide étant inséré dans l'évidement,
**caractérisé en ce que**
le dispositif de décharge de pression a un dispositif (30) de retenue en carbone pour une fixation à forme finale du support de vide dans l'évidement, le dispositif de décharge de pression étant fait sans matériau adhésif et/ou métal.

2. Dispositif de décharge de pression selon la revendication 1,
**caractérisé en ce que**
le dispositif (10) de décharge de pression est entièrement en carbone.

3. Dispositif de décharge de pression selon l'une quelconque des revendications précédentes,
**caractérisé en ce que**
la zone (17) de rupture a une membrane (18, 38) uniformément épaisse et plane.

4. Dispositif de décharge de pression selon l'une quelconque des revendications précédentes,
**caractérisé en ce que**
la membrane (18, 38) a un point de rupture prédéterminé réalisé par fatigue de matériau.

5. Dispositif de décharge de pression selon l'une quelconque des revendications précédentes,
**caractérisé en ce que**
le côté (13) de sortie du disque (11, 31) de rupture est réalisé entièrement plan.

6. Dispositif de décharge de pression selon l'une quelconque des revendications précédentes,
**caractérisé en ce que**
le support (12, 32) de vide est réalisé en forme de disque et s'appuie contre un diamètre (24) intérieur de l'anneau (16) de retenue avec son diamètre (23) extérieur.

7. Dispositif de décharge de pression selon l'une quelconque des revendications précédentes,
**caractérisé en ce qu'**
une pluralité des ouverture (19) de passage sont formées dans le support (12, 32) de vide.

8. Dispositif de décharge de pression selon l'une quelconque des revendications précédentes,
**caractérisé en ce qu'**
un arrêt (36) est formé dans l'évidement (33) et limite un mouvement du support (32) de vide en direction de la zone de rupture.

9. Dispositif de décharge de pression selon l'une quelconque des revendications précédentes,
**caractérisé en ce que**
le dispositif (30) de retenue est fait d'une rainure dans une surface intérieure de l'anneau (16) de retenue et d'un élément (28) de retenue inséré dans la rainure.

10. Dispositif de décharge de pression selon la revendication 9,
**caractérisé en ce que**
le support (12, 32) de vide s'appuie contre la zone (17) de rupture avec un extrémité et contre l'élément (28) de retenue avec un extrémité opposé.

11. Dispositif de décharge de pression selon la revendication 9 ou 10,
**caractérisé en ce que**
la rainure est réalisée comme une rainure (27, 35) circulaire.

12. Dispositif de décharge de pression selon l'une quelconques des revendications 9 à 11,
**caractérisé en ce que**
l'élément (28) de retenue est un fil, un cordon, une cordelette ou une bande en fibres de carbone.

13. Dispositif de décharge de pression selon la revendication 12,
**caractérisé en ce que**
les fibres de carbone sont infiltrées par et/ou revêtues du carbone pyrolytique.

14. Dispositif de décharge de pression selon l'une quelconque des revendications 9 à 13,
**caractérisé en ce que**
l'élément (28) de retenue est rigide au moins en partie.

15. Dispositif de décharge de pression selon l'une quelconque des revendications 9 à 14,
**caractérisé en ce que**
l'élément (28) de retenue forme une rondelle (29) Grower.

16. Procédé pour la production d'un dispositif (10) de décharge de pression, un disque (11, 31) de rupture et un support (12, 32) de vide du dispositif de décharge de pression étant en graphite, le disque de rupture étant fait en une seule pièce ayant un côté (13) de sortie et un côté (14) d'entrance, un évidement (15, 33) étant formé au côté d'entrance du disque de rupture et formant une zone (17) de rupture dans l'anneau (16) de retenue du disque de rupture, le support de vide étant inséré dans l'évidement,
**caractérisé en ce qu'**
un dispositif (30) de retenue du dispositif de décharge de pression est en carbone, le support de vide étant fixé dans l'évidement à forme finale au moyens du dispositif de retenue, le dispositif de décharge de pression étant fait sans matériau adhésif et/ou métal.
